# EUROPEAN PATENT SPECIFICATION

(11) **EP 2 790 415 B1**
(45) Date of publication and mention of the grant of the patent: **15.09.2021**
(21) Application number: 14163900.5
(22) Date of filing: 08.04.2014
(51) Int. Cl.: H04Q 9/00, G08C 17/02

(54) **Home appliance and method of controlling the same**
Haushaltsgerät und Steuerungsverfahren dafür
Appareil domestique et son procédé de contrôle

(30) Priority: 09.04.2013 KR 20130038784
(43) Date of publication of application: 15.10.2014
(73) Proprietor: LG Electronics, Inc., Seoul 150-721 (KR)
(72) Inventor: Ha, Mikyung, 641-110 Kyungsangnam-do (KR); Jeon, Jinho, 641-110 Kyungsangnam-do (KR); Cho, Bokyung, 641-110 Kyungsangnam-do (KR)
(74) Representative: Morrall, Jonathan Ian McLachlan

(56) References cited:
- US-A- 5 745 049
- US-A1- 2008 048 837
- None

## Description

### Field

The present disclosure relates to a home appliance and a method of controlling the same.

### Description of the Related Art

In general, laundry processing devices include a washing machine, a dryer, and a washing machine having a dryer function.

In order to remove pollutants of the laundry such as clothes and bedding using water and detergent and a mechanical operation, a washing machine is a device that performs a process such as washing, rinsing, and dehydration. Such washing machines are classified into a top load type washing machine of rotating a drum in which the laundry is filled about a vertical axis and a front load type washing machine of rotating a drum in which the laundry is filled about a horizontal axis.

The dryer is a device that dries the laundry to be dried by applying warm air to the laundry to be dried and that injects the laundry to be dried into a rotating drum and that dries the laundry by applying warm wind or cold wind into the drum.

The washing machine having a dryer function has both a washing function and a dry function and is a device that injects the laundry such as clothes into a rotating drum and that selects a desired function and that performs washing or drying.

Nowadays, in order to easily perform use and diagnosis of the washing machine, a method of providing a guide is important. A method of easily using and diagnosing the washing machine using a mobile device in which a user carries regardless of a model of the washing machine is required.

US 2008/0048837 discloses various embodiments and methods relating to a radio frequency (RF) tag, for example, an RF recording and retrieval system. US 5745049 discloses a wireless equipment diagnosis system for diagnosing various equipment in a plant and to wireless data acquisition equipment used in such a system.

### SUMMARY OF THE INVENTION

The present invention has been made in view of the above problems, and provides a home appliance and a method of controlling the same that diagnose a state of a washing machine using a mobile device.

Aspects of an invention are defined in the appended independent claims. Optional features of embodiments are set out in the dependent claims.

### BRIEF DESCRIPTION OF THE DRAWINGS

The objects, features and advantages of the present disclosure will be more apparent from the following detailed description in conjunction with the accompanying drawings, in which:
FIG. 1 is a diagram illustrating constituent elements of a home appliance diagnosis system according to an embodiment;
FIG. 2 is a perspective view illustrating a structure of a washing machine, which is a home appliance according to an embodiment;
FIG. 3 is a block diagram illustrating constituent elements of a washing machine, which is a home appliance according to an embodiment;
FIG. 4 is a perspective view illustrating a structure of a mobile device of a home appliance diagnosis system according to an embodiment;
FIG. 5 is a block diagram illustrating constituent elements of a mobile device of a home appliance diagnosis system according to an embodiment;
FIGS. 6 to 10 are diagrams illustrating operation of a home appliance diagnosis system according to an embodiment;
FIG. 11 is a flowchart illustrating a method of controlling a home appliance according to an embodiment;
FIG. 12 is a flowchart illustrating a method of controlling a home appliance diagnosis system according to an embodiment; and
FIG. 13 is a message flow diagram illustrating a communication process of a home appliance diagnosis system according to an embodiment.

### DETAILED DESCRIPTION OF EMBODIMENTS

These and other objects of the present application will become more readily apparent from the detailed description given hereinafter. However, it should be understood that the detailed description and specific examples, while indicating preferred embodiments, are given by way of illustration only, since various changes and modifications within the scope of the disclosure will become apparent to those skilled in the art from this detailed description. Like reference numerals designate like elements throughout the specification.

Hereinafter, embodiments of the present disclosure will be described in detail with reference to the drawings. When describing embodiments of the present disclosure, there is disclosed a home appliance illustratively a washing machine among laundry processing devices, but the home appliance is not limited thereto and the home appliance can be a washing machine having a steam spray function, and other laundry processing devices such as a washing machine having a dry function or a dryer within the scope of the disclosure.

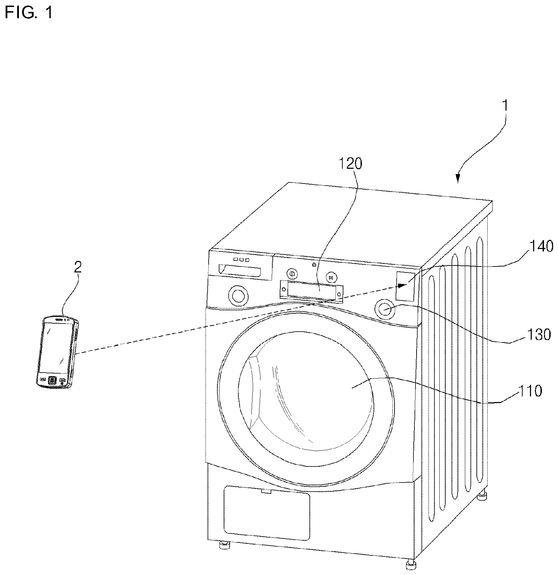

Referring to FIG. 1, the home appliance diagnosis system according to an embodiment includes a washing machine 1, which is an exemplary embodiment of a home appliance product, including a tag unit 140 that stores state data, which is raw data that detects an operation state and diagnosis result data representing whether an error occurs in an operation state by processing the state data; and a mobile device 2 including a communication device that receives state data and diagnosis result data and a display that displays data in which the communication device receives, by tagging with the tag unit 140.

The washing machine 1 includes the tag unit 140. When a tag storage unit that stores state data and diagnosis result data and an external device are tagged, the tag unit 140, which includes a transmitting and receiving unit, transmits the state data and the diagnosis result data.

The washing machine 1 may include a detection unit that detects an operation state. The washing machine 1 may store various data based on an operation state detected by the detection unit at the tag storage unit. When at least one predetermined event occurs, the washing machine 1 may update state data and diagnosis result data stored at the tag storage unit.

The mobile device 2 may communicate with the washing machine 1. When the tag unit 140 of the washing machine 1 is tagged, the mobile device 2, including a communication device, performs data communication.

The mobile device 2 may include a display that receives data from the washing machine 1 and that visually displays the data. The mobile device 2 may process data received from the washing machine 1 and display various information according to request information in which a user requests to display.

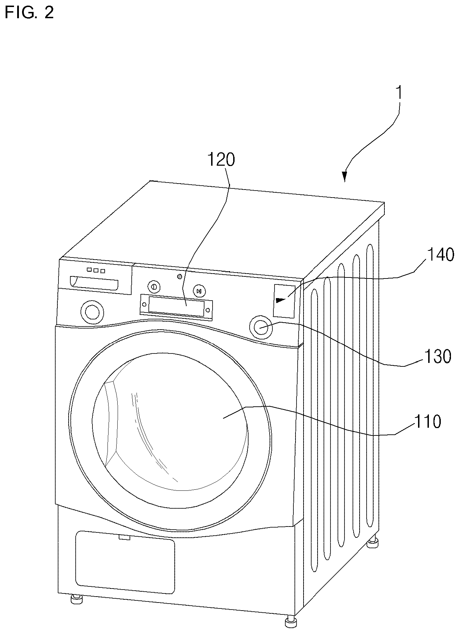

Referring to FIG. 2, the washing machine 1 according to an embodiment includes a case that forms an external appearance and a drum rotatably provided within the case to receive the laundry such as clothes. At an inner circumferential surface of the drum, a lift is provided, and when the drum rotates, the lift may move clothes upward and downward.

The case may have a clothing injection port to be opened to inject the laundry into the drum at the front side. At an upper portion of a front surface of the case, a display device 120, which is one of output units that display various information about an operation state of the washing machine may be disposed. The display device 120 may include a light source such as a Liquid Crystal Display (LCD) and a Light Emitting Diode (LED) that display control information of the washing machine, but the display device 120 is not limited thereto.

In the clothing injection port, a door 110 may be installed. The door 110 may open and close a clothing injection port, which is an inlet that injects the laundry into the drum. The door 110 may be manually manipulated by a user or may be operated by an electronic control. The door 110 may be rotatably connected to the case.

At the front side of the case, at least one button 130 may be disposed. As shown in FIG. 2, the button 130 is a mechanical button to be manipulated by a user's touch, but the button 130 is not limited thereto, and the button 130 may include a touchpad and recognize a touch. The button 130 may correspond to a control instruction that operates the washing machine.

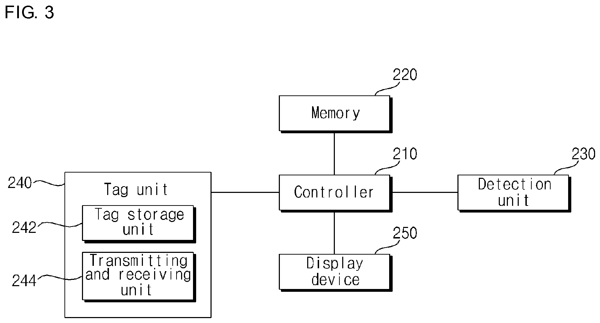

Referring to FIG. 3, the home appliance according to an embodiment includes a detection unit 230 that grasps various states, a controller 210 that receives state data, which is raw data grasped by the detection unit 230 and that processes state data and that outputs diagnosis result data representing whether an error occurs in an operation state, and a tag unit 240 including a tag storage unit 242 that stores state data and diagnosis result data and a transmitting and receiving unit 244 that transmits state data and diagnosis result data when an external device is tagged. The home appliance of an exemplary embodiment may be a washing machine.

The controller 210 may control operation of the home appliance. The controller 210 may transmit and receive a control signal to and from other elements of the home appliance. The controller 210 may transmit a signal to other elements of the home appliance to control the other elements.

In order to process data, the controller 210 may control the display device 250 to display data stored at a memory 220 or may perform a program stored at the memory 220.

The controller 210 may store state data, which is raw data including various states of the washing machine 1 grasped by the detection unit 230 at the memory 220 or the tag storage unit 242. The controller 210 may process state data and output diagnosis result data. The diagnosis result data may be information on whether an error occurs in an operation state based on state data.

The controller 210 may obtain diagnosis result data representing whether an error occurs in an operation state based on state data. The controller 210 may control diagnosis result data to include information on whether an error occurs in at least one predetermined important item. The diagnosis result data is obtained, or derived, from the state data.

When a predetermined event occurs, the detection unit 230 may grasp an operation state of the washing machine 1. The predetermined event may include at least one of when the detection unit 230 newly detects an operation state, when an error occurs, when power is turned off, and when a plug is unplugged.

The controller 210 may store state data or diagnosis result data of a state of the washing machine 1 at a plurality of time points corresponding to events of a plurality of times corresponding to the predetermined number of times at the memory 220 or the tag storage unit 242. The controller 210 may store state data or diagnosis result data corresponding to a recent state of a plurality of time points at the memory 220 or the tag storage unit 242.

The memory 220 may include a high speed random access memory (RAM). The memory 220 may include a non-volatile memory such as at least one magnetic disk storage device, a flash memory device, or other non-volatile solid phase memory devices, but the memory 220 is not limited thereto and may include a readable storage medium.

For example, the memory 220 may include an Electronically Erasable and Programmable Read Only Memory (EEP-ROM), but the memory 220 is not limited thereto. The EEP-ROM may write and erase information by the controller 210. Even if power is turned off and power supply is stopped, the EEP-ROM may be a storage device that does not erase but maintains information stored therein.

The memory 220 may store various programs or data by interlocking with the controller 210. A program in which the memory 220 stores may be executed by the controller 210.

The memory 220 may store state data and diagnosis result data. When at least one predetermined event occurs, the controller 210 may update operation state data and diagnosis result data stored at the memory 220. Even when power supply is intercepted, the memory 220 may maintain state data and diagnosis result data.

The at least one event may include at least one of when the detection unit newly detects an operation state of the washing machine 1, when an error occurs, when power is turned off, and when a plug is unplugged.

The washing machine 1 may perform a plurality of washing operations. For example, the washing machine 1 may perform a washing operation such as wool washing, general washing, dehydration, or drying, but a kind of the washing operation is not limited thereto.

The display device 250 may display various information of the washing machine. An output unit (not shown) may include a display that visually displays information of the washing machine or a speaker that audibly outputs information of the washing machine, but the output unit may include various output devices that are not limited thereto.

The tag unit 240 may communicate with an external device. The tag unit 240 includes a tag storage unit 242 that stores data and a transmitting and receiving unit 244 that communicates with the outside. The tag unit 240 may perform Near Field Communication (NFC).

The tag unit 240 may store model information of the washing machine 1. The model information may include a production company and a model name of the washing machine and information on whether the washing machine can communicate.

NFC may operate with a simple tag operation. In NFC, data may be processed and transmitted and received with a desired method. In NFC, compatibility between various devices is available, and when entire terminals including an NFC module follow a data specification, data can be synchronized.

In NFC, communication may be generally performed within a communication distance of less than 10cm. In NFC, because a communication distance is short, personal information may be less leaked. When a NFC function is activated, the tag unit 240 may read or write data through a tagged device.

The tag storage unit 242 may receive state data and diagnosis result data from the controller 210. When at least one predetermined event occurs, the controller 210 may update state data and diagnosis result data stored at the tag storage unit 242.

At least one event may include at least one of when the detection unit 230 newly detects an operation state of the washing machine 1, when an error occurs, when power is turned off, and a plug is unplugged. The tag storage unit 242 may store state data and diagnosis result data, and even when power supply is intercepted, the tag storage unit 242 may maintain data.

The detection unit 230 may include a plurality of sensors that detect various states of the washing machine. For example, the detection unit 230 may detect an operation course in which the washing machine presently performs, a water temperature, dehydration strength, the operating number of times, or an operation state. For example, the detection unit 230 may include a plurality of sensors such as a thermometer that detects a temperature of water, a sensor that detects a rotation speed of a drum, and a sensor that detects the operating number of times of a drum, but a kind of the detection unit 230 is not limited thereto.

Hereinafter, for convenience of description, in mobile terminals of several types such as a folder type, a bar type, a swing type, and a slider type, a bar type mobile terminal having a front surface touch screen is exemplified. However, the present invention is not limited to a bar type mobile terminal and may be applied to entire type mobile terminals including the foregoing type.

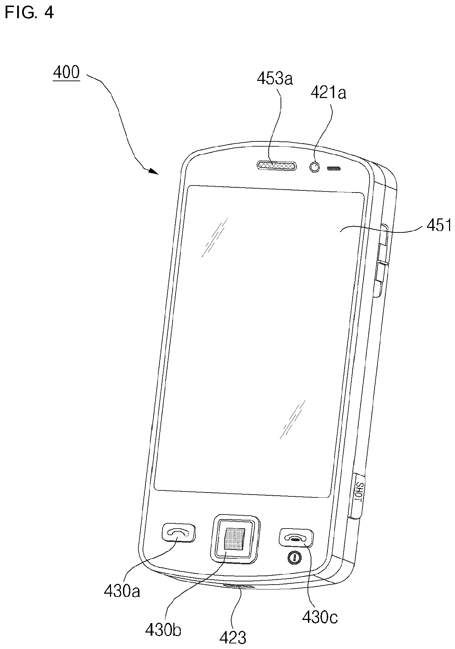

Referring to FIG. 4, the mobile device 400 of a home appliance diagnosis system according to an embodiment includes a communication device that receives state data and diagnosis result data by tagging with a tag unit of the washing machine and a display 451 that displays data received by the communication device.

As touch pads are overlapped in a layer structure, the display 451 may operate as a touch screen and input information by a user's touch.

A speaker 453a may be embodied in a form of a receiver or a speaker. A camera 421a may be embodied in a form appropriate to photograph an image or a moving picture of a user. A microphone 423 may be embodied in an appropriate form to receive an input of a user's voice and other sounds.

The mobile device 400 may include at least one input unit. For example, the mobile device 400 may include first to third input units 430a, 430b, and 430c. From a functional viewpoint, the first to third input units 430a, 430b, and 430c are elements for inputting an instruction such as communication, mouse point movement, screen scrolling, start, and end.

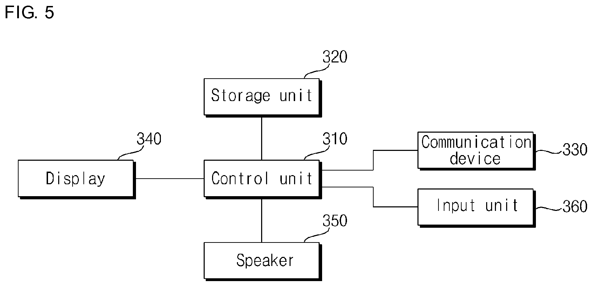

Referring to FIG. 5, a mobile device of a home appliance diagnosis system according to an embodiment includes a control unit 310 that performs various controls, a storage unit 320 that stores various programs or data by interlocking with the control unit 310, a communication device 330 that receives state data and diagnosis result data, and a display 340 that displays data received by the communication device 330.

The control unit 310 may control operation of the mobile device. In order to process data, the control unit 310 may control the display 340 to display data stored at the storage unit 320 or may perform a program stored at the storage unit 320.

The control unit 310 may store state data and diagnosis result data received by the communication device 330 at the storage unit 320. The control unit 310 may control the display 340 to display state data and diagnosis result data received by the communication device 330.

The control unit 310 may control the display 340 to display information on whether an error occurs in the washing machine. The control unit 310 may control the display 340 to display diagnosis result data. The control unit 310 may determine whether diagnosis result data includes request information in which the user requests.

For example, the diagnosis result data may include information on whether an error occurs in at least one predetermined important item, and the control unit 310 may determine whether request information requested by the user corresponds to a diagnosis result value in which diagnosis result data includes.

If request information requested by the user does not correspond to a diagnosis result value in which diagnosis result data includes, the control unit 310 may control the display 340 to display state data. For example, the state data may be raw data representing an operation state of the washing machine, and when request information in which the user requests is not included in diagnosis result data, which is a diagnosis result value of a limited item, the control unit 310 may control the display 340 to display state data.

The display 340 may display various information. The display 340 may be a means that visually displays information. For example, the display 340 may include at least one of a liquid crystal display (LCD), a thin film transistor-liquid crystal display (TFT-LCD), an organic light-emitting diode (OLED), a flexible display, and a three-dimensional display (3D display).

The display 340 may exist in at least two according to an implementation form of the mobile device. For example, the mobile device may simultaneously have an external display unit (not shown) and an internal display unit (not shown).

The display 340 may receive a control signal of the control unit 310 and display state data or diagnosis result data.

A speaker 350 may output state data or diagnosis result data with a sound signal. For example, when an input unit 360 receive an input that requests to output data with a sound, the control unit 310 may output state data or diagnosis result data in a sound signal with the speaker 350.

The communication device 330 may perform NFC. When the communication device 330 is located within a predetermined distance from a tag unit of the washing machine, the communication device 330 may perform communication with the tag unit. The communication device 330 may receive state data, diagnosis result data, or model information from the tag unit.

The control unit 310 may determine whether a diagnosis mode that diagnoses the washing machine can be performed based on model information in which the communication device 330 receives. For example, the control unit 310 may grasp a washing machine production company and a washing machine model in which a diagnosis mode supports. The control unit 310 may determine whether the washing machine can perform NFC based on model information and whether a diagnosis mode can be performed.

The control unit 310 may control the display 340 to display state data or diagnosis result data on a state of the washing machine of a plurality of time points corresponding to events of the predetermined number of times that have occurred in the washing machine.

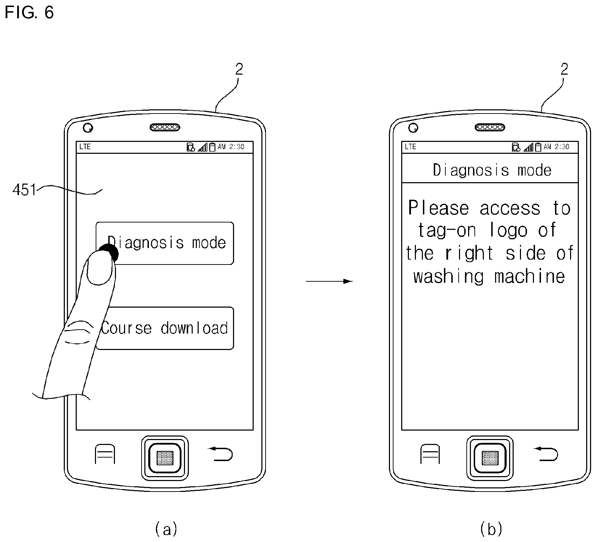

FIGS. 6 to 10 are diagrams illustrating operation of a home appliance diagnosis system according to embodiments.

Referring to FIG. 6, a mobile device 2 receives a request of a diagnosis mode through the input unit. For example, when a display 451 is a touch screen that recognizes a touch input, the input unit may be included in the display 451, and FIGS. 6 to 10 illustrate the mobile device 2 including a touch screen.

When the mobile device 2 selects a diagnosis mode (a), the mobile device 2 may display (b) with the display 451 that the mobile device 2 should be tagged with the washing machine. The user may view the display 451 that displays that the mobile device 2 should be tagged with the washing machine and may detect that the tag unit of the washing machine should be tagged.

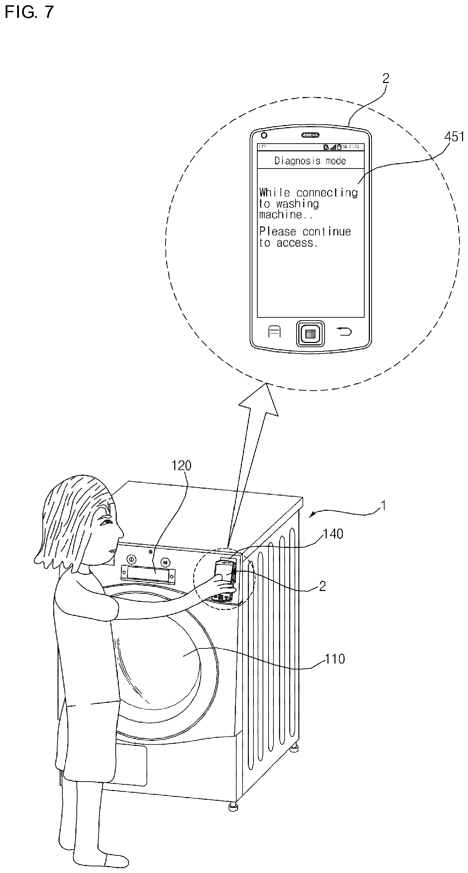

Referring to FIG. 7, the mobile device 2 and the tag unit 140 of the washing machine 1 may be tagged.

When the mobile device 2 and the tag unit 140 of the washing machine 1 are located within a predetermined distance, a communication device of the mobile device 2 and the tag unit 140 of the washing machine 1 may start communication.

The tag unit 140 may transmit state data, diagnosis result data, and model information to the communication device of the mobile device 2. The model information may be included in a header of a packet, but a location of the model information is not limited thereto. The tag unit 140 and the communication device of the mobile device 2 may perform communication for a predetermined time. While performing communication, in order to maintain a distance in which tagging is available, the display of the mobile device 2 may display that communication is performing.

A control unit of the mobile device 2 may receive model information and determine whether a diagnosis mode can be performed. When the washing machine is determined as a product that cannot perform a diagnosis mode from the received model information, the mobile device 2 can display in the display that a diagnosis mode cannot be performed.

While the tag unit of the washing machine and the communication device of the mobile device are communicating, the mobile device 2 may continue to display information that tagging should be maintained in the display 451.

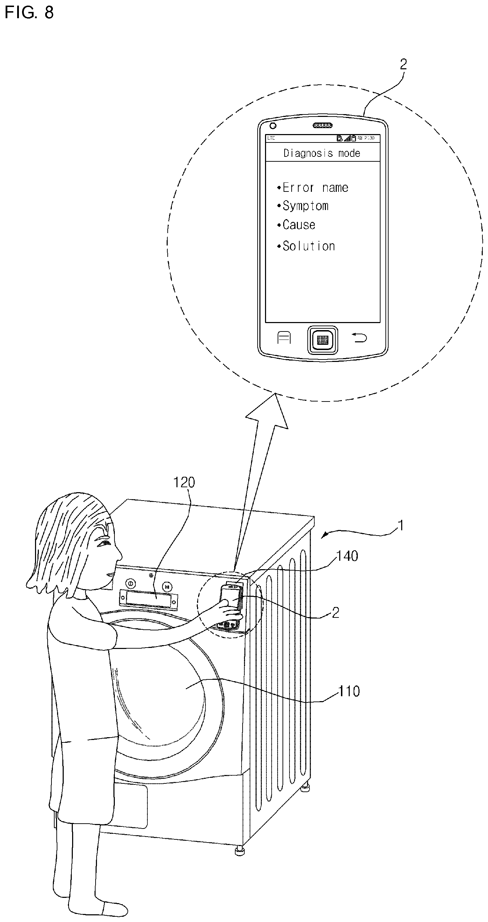

Referring to FIG. 8, when the mobile device 2 determines that a diagnosis mode can be performed based on model information, the mobile device 2 displays state data or diagnosis result data with the display.

For example, the mobile device 2 may grasp a recent state of the washing machine 1 based on diagnosis result data presently stored at the tag unit 140 of the washing machine 1. For example, diagnosis result data or state data may include information on whether a problem occurs in the washing machine based on a recent error content or operation state of the washing machine 1.

When the display of the mobile device 2 displays diagnosis result data, the display may display at least one of a name of an error that has occurred in the washing machine, a symptom of the washing machine, a cause of an error, and a solution.

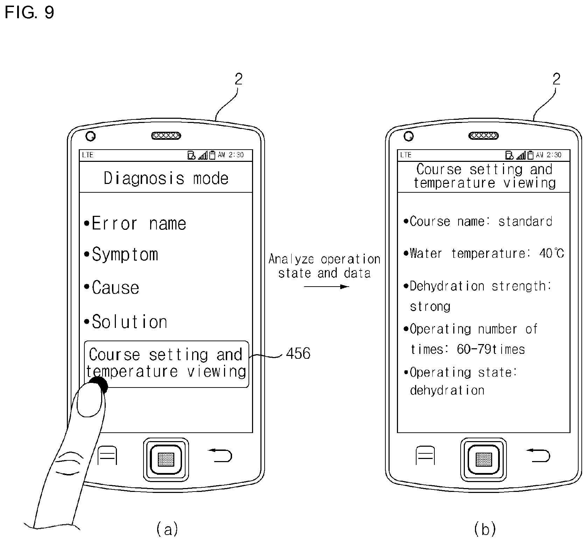

Referring to FIG. 9, the control unit of the mobile device 2 grasps, or receives, request information in which a user requests. The control unit determines whether request information is included in a diagnosis result in which diagnosis result data includes.

For example, when the user requests raw data in which a diagnosis unit of the washing machine grasps, the control unit may control the display 451 to display state data. The control unit may control to display a meaning of state data so that the user easily grasps information.

For example, the state data may include a name of an operation course of the washing machine, a water temperature, dehydration strength, the operating number of times, or an operation state. The state data may include information such as an operation course in which the washing machine operates or error generation.

The display of the mobile device 2 may display information in addition to a diagnosis result value in which diagnosis result data includes with an icon 456 in which the user requests. For example, the display of the mobile device 2 may display an icon 456 in which a character of course setting and temperature viewing is displayed, as shown in FIG. 9.

The control unit of the mobile device 2 controls to display an icon in which the user may input request information, and when the icon is selected, the control unit may control the display to display state data.

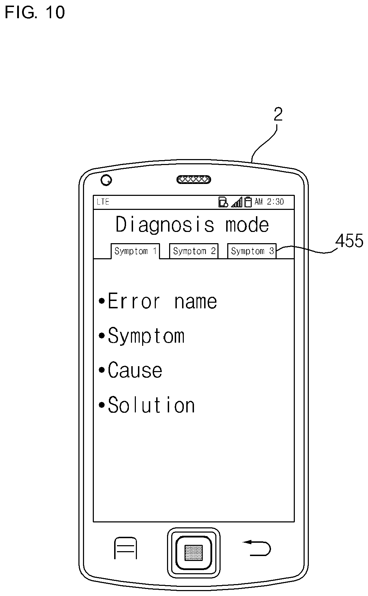

Referring to FIG. 10, the mobile device 2 displays a plurality of state data and diagnosis result data.

For example, the display of the mobile device 2 may display a plurality of tabs and display a plurality of state data and diagnosis result data to correspond thereto. Each state data and diagnosis result data may be a detection result detected at a plurality of time points. The detection result detected at the plurality of time points may be a result detected at a time point in which a predetermined event occurs.

The state data and the diagnosis result data may be data on general operations of a home appliance or may be a result of data detected when an error occurs, but the state data and the diagnosis result data is not limited thereto.

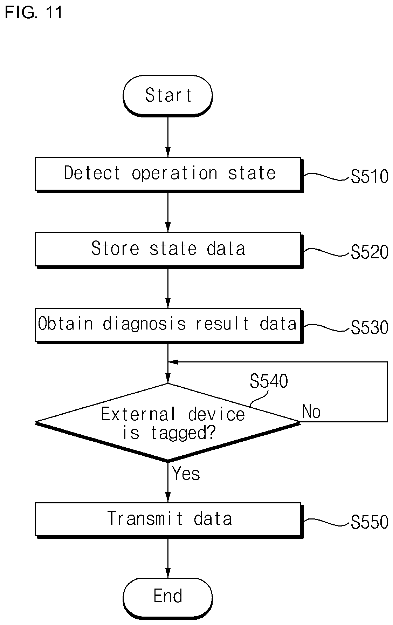

FIG. 11 is a flowchart illustrating a method of controlling a home appliance according to an embodiment.

Referring to FIG. 11, a method of controlling a home appliance according to an embodiment includes step (S510) of detecting an operation state of the home appliance, step (S520) of storing state data, which is detected raw data, step (S530) of obtaining diagnosis result data representing whether an error occurs in an operation state from state data, step (S540) of detecting whether an external device is tagged, and step (S550) of transmitting the state data and the diagnosis result data, if an external device is tagged. The home appliance of an exemplary embodiment may be a washing machine.

At step (S510) of detecting an operation state of the home appliance, a detection unit of the washing machine may detect various states of the washing machine. The detection unit may transmit information about a detected state of the washing machine to the controller.

At step (S520) of storing state data, the controller, having received state data from the detection unit may store the state data at a memory or a tag storage unit in which a tag unit includes.

At step (S530) of obtaining diagnosis result data, the controller, having received state data from the detection unit may obtain diagnosis result data including a diagnosis result value according to limited several diagnosis items based on state data.

The controller may store state data and diagnosis result data at the memory and the tag storage unit. When one of predetermined several events occurs, the controller may update state data and diagnosis result data stored at the memory and the tag storage unit. The diagnosis result data may include information on whether an error occurs in at least one predetermined important item.

At step (S540) of detecting whether an external device is tagged, the tag unit may continue to determine whether an external device including a communication module that can be tagged is located within a predetermined distance. The external device may be a mobile device tagged with the tag unit of the home appliance to receive state data and diagnosis result data.

When the tag unit detects that an external devices including a module that can perform NFC is located within a predetermined distance, the tag unit may transmit data to the external device and synchronize data (S550).

A method of controlling a home appliance of an exemplary embodiment may further include step of storing state data and diagnosis result data at a tag storage unit. When at least one predetermined event occurs, the home appliance may update state data and diagnosis result data.

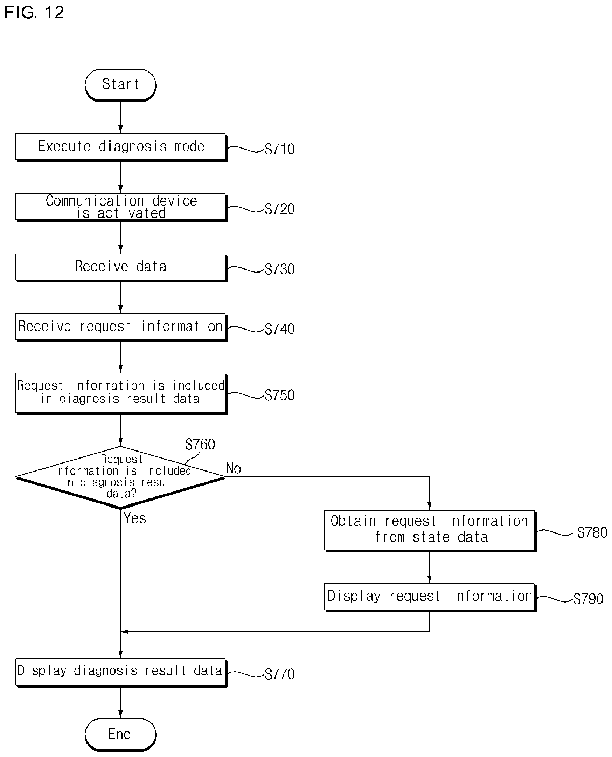

Referring to FIG. 12, a method of controlling a home appliance diagnosis system according to an embodiment includes step (S710) of executing a diagnosis mode, step (S720) of determining whether a communication device is activated in order to tag, step (S730) of obtaining state data and diagnosis result data through tagging and receiving diagnosis result data representing whether an error occurs in an operation state, and step (S770) of displaying the received state data or diagnosis result data. The home appliance of an exemplary embodiment may be a washing machine.

At step (S710) of executing a diagnosis mode, the mobile device may receive an input of an instruction that instructs to execute a diagnosis mode from the user. When the mobile device receives an instruction that instructs to execute a diagnosis mode, the mobile device may determine whether a communication device that can tag with a tag unit of the washing machine is activated (S720). If a communication device is not activated, the mobile device may display that NFC cannot be performed and display information that requests to activate the communication device. If a communication device is activated, the mobile device may display information that instructs to tag.

At step (S730) of receiving state data and diagnosis result data, when the mobile device is located at a constant distance from a tag unit of the washing machine, the mobile device may perform communication with the tag unit. The mobile device may receive state data and diagnosis result data and store the state data and diagnosis result data in a storage unit.

At step (S730) of receiving state data and diagnosis result data, when the mobile device is located at a constant distance from a tag unit, the mobile device may output with a sound that communication is started with a speaker.

At step (S730) of receiving state data and diagnosis result data, the mobile device may display with a display that state data and diagnosis result data are receiving.

At step (S730) of receiving state data and diagnosis result data, the mobile device may receive model information of the washing machine and determine whether a diagnosis mode can be performed based on model information. The model information may include at least one of a production company and a model name of the washing machine and information on whether the washing machine can communicate.

A method of controlling a washing machine diagnosis system according to an embodiment may further include step (S740) of receiving an input of request information from the user and step of determining (S750) whether a diagnosis result value corresponding to request information is included in a plurality of diagnosis result values in which diagnosis result data includes.

The mobile device may determine whether information corresponding to request information is included in a plurality of diagnosis result values in which diagnosis result data includes (S760), and if information corresponding to request information is included in a plurality of diagnosis result values in which diagnosis result data includes, the mobile device may display the diagnosis result data (S770).

The mobile device may determine whether information corresponding to request information is included in a plurality of diagnosis result values in which diagnosis result data includes (S760), and if request information is not included in diagnosis result data, the mobile device may display state data. For example, the mobile device may obtain request information from state data (S780) and display the request information in the display (S790).

For example, the request information may be at least one of a course name, a water temperature, dehydration strength, the operating number of times, or an operation state. The state data may include request information. For example, the request information may be state data, and if request information is not a diagnosis result value in which diagnosis result data includes, the mobile device may display state data with the display.

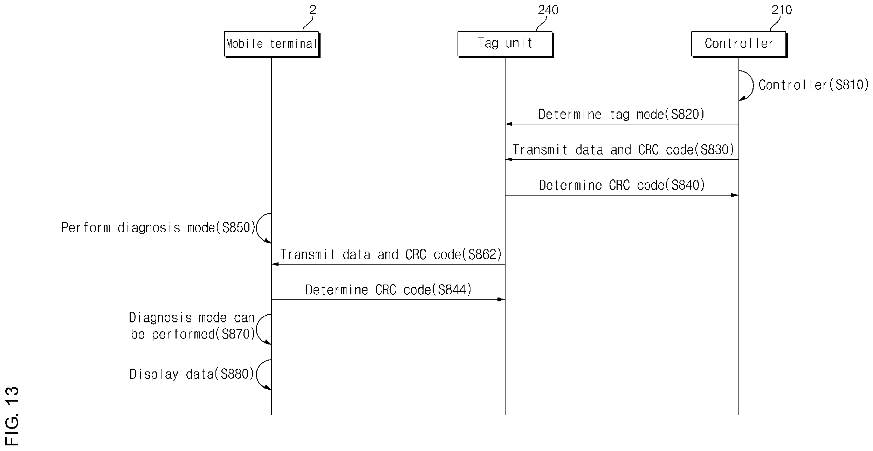

Referring to FIG. 13, the controller 210 of the washing machine determines a communication relationship between the controller 210 and the tag unit 240 of a washing machine, which is an exemplary embodiment of a home appliance and a communication relationship between the tag unit 240 and the mobile device 2.

The controller 210 of the washing machine may determine whether an event that updates state data and diagnosis result data occurs (S810). The event may include at least one of when a detection unit of the washing machine newly detects an operation state, when an error occurs, when power is turned off, and when a plug is unplugged.

The controller 210 may determine a tag mode of the tag unit 240 (S820). For example, the controller 210 may determine whether the tag unit 240 is presently tagged with another external device and is communicating with another external device. If the tag unit 240 is not presently communicating with another external device, the controller 210 may transmit state data and diagnosis result data to the tag unit 240 (S830).

When the controller 210 transmits data to the tag unit 240, the controller 210 may add a CRC code to data and transmit the data to the tag unit 240. When the tag unit 240 receives state data and diagnosis result data from the controller 210, the tag unit 240 may determine whether data is appropriately received based on the CRC code (S840).

The tag unit 240 may receive model information from the controller 210 and store the model information at the tag storage unit. When each data is transmitted and received, a process of determining whether an error occurs may be performed, but a method thereof is not limited. In an exemplary embodiment, a washing machine diagnosis system of the present disclosure may use a CRC method.

The mobile device 2 may perform a diagnosis mode (S850). When the mobile device 2 executes a diagnosis mode, the mobile device 2 may display with the display that the mobile device 2 should be tagged with the washing machine.

When the mobile device 2 enters within a predetermined distance from the tag unit 240, the tag unit 240 may transmit state data, diagnosis result data, and model information to the mobile device 2 (S862). When the mobile device 2 receives the data, the mobile device 2 may determine whether a CRC code is appropriately received (S864).

The mobile device 2 may determine whether a diagnosis mode may be executed based on model information (S870). If a diagnosis mode may be executed, the mobile device 2 may display state data and diagnosis result data (S880).

Even if entire constituent elements constituting an embodiment are coupled to one or are operated by coupling, the present disclosure is not limited to such an exemplary embodiment. The entire constituent elements may be selectively coupled and operated in at least one constituent element according to an exemplary embodiment within the scope of the present disclosure.

Entire constituent elements may be embodied with one independent hardware, but a portion or the entire of constituent elements is selectively combined and may be embodied as a computer program having a program module that performs a partial function or an entire function combined in one hardware or a plurality of hardware.

A plurality of codes and code segments constituting a computer program may be easily reasoned by a person skilled in the art. Such a computer program may be stored in a computer readable medium, be read and executed by a computer, and embody an exemplary embodiment of the present invention. A recording medium of a computer program may include a magnetic recording medium, a light recording medium, and a carrier wave medium.

As described above, a home appliance control system according to the present invention can easily receive information of a home appliance with a mobile device using NFC and thus a method of using a home appliance can be intuitively provided to a user.

In a home appliance and a method of controlling the same according to the present disclosure, the home appliance can obtain diagnosis result data and a user can quickly determine a diagnosis result without a separate calculation with a mobile device.

In a home appliance and a method of controlling the same according to the present disclosure, when an event occurs, by updating state data and diagnosis result data, a user can determine most recent information.

In a home appliance and a method of controlling the same according to the present disclosure, by transmitting state data, which is raw data to a mobile device, when a user requests detailed information of the home appliance, the user can determine the detailed information without a separate tag.

In a home appliance and a method of controlling the same according to the present disclosure, a mobile device receives model information from the home appliance, by determining whether a diagnosis mode can be performed based on the model information, reliability of provided information can be maximized.

In a home appliance and a method of controlling the same according to the present disclosure, by tagging a tag unit of the home appliance and a mobile device, the home appliance and the mobile device transmit and receive information and thus user convenience can be maximized.

In a home appliance and a method of controlling the same according to the present disclosure, by displaying whether tagging is appropriately performed or by displaying so that a user may recognize whether communication is presently performing, if tagging is appropriately performed, reliability of communication can be secured.

### <Description of Symbols>

- 1:: washing machine
- 110:: door
- 120:: display device
- 130:: button
- 140:: tag unit
- 2:: mobile device

## Claims

1. A home appliance diagnosis system, comprising:
a mobile device (2, 400); and
a home appliance (1), the home appliance (1) comprising:
a controller (210) arranged to process state data, which is raw data representing an operation state of the home appliance, and output diagnosis result data representing whether an error has occurred in the home appliance; and
a tag unit (240) comprising a tag storage unit (242) arranged to store the state data and the diagnosis result data, the tag unit also comprising a transmitting and receiving unit (244) arranged to transmit the state data and the diagnosis result data to the mobile device (2, 400) when the mobile device is tagged with the tag unit,
wherein the mobile device (2, 400) comprises a communication device (330) arranged to tag with the tag unit (240) and receive the state data and the diagnosis result data, the mobile device (2, 400) further comprising a display (340, 451) arranged to display data received by the communication device,
wherein the system is **characterized in that**:
the controller (210) of the home appliance (1) is arranged to update the state data and the diagnosis result data at the tag unit (240) when at least one predetermined event occurs; and
the mobile device (2, 400) is configured to display a plurality of tabs and display a plurality of the state data and diagnosis result data to correspond thereto, wherein each state data and diagnosis result data is a detection result detected at a plurality of time points, wherein each detection result detected at the plurality of time points is a result detected at a time point in which the at least one predetermined event occurs.

2. The home appliance diagnosis system of claim 1,
wherein the at least one predetermined event comprises at least one of: a detection unit newly detects the operation state, an error occurs, the power is turned off, and a plug is unplugged.

3. The home appliance diagnosis system of claim 1 or 2, wherein the mobile device further comprises an input unit (360,430a,430b,430c) arranged to recognize an external input and a control unit (310) arranged to determine whether the diagnosis result data comprises request information requested by the user.

4. The home appliance diagnosis system of claim 3, wherein the control unit is further arranged to control the display to display the state data, when request information requested by the user is not a diagnosis result value included in the diagnosis result data.

5. The home appliance diagnosis system of any one of claims 1 to 4, wherein the mobile device further comprises a speaker (350,453a) arranged to output a sound signal, when the communication device and the tag unit are tagged,
optionally,
wherein the speaker is arranged to output the state data or the diagnosis result data as a sound.

6. The home appliance diagnosis system of any one of claims 1 to 5, wherein the display is arranged to display that the tag unit and the communication device are communicating.

7. The home appliance diagnosis system of any one of claims 1 to 6, wherein the mobile device further comprises a control unit is arranged to determine whether the diagnosis result data comprises request information requested by the user,
wherein the tag unit is arranged to store model information of the home appliance,
the communication device is arranged to receive the model information from the tag unit, and
the control unit is arranged to determine whether a diagnosis mode can be performed based on the model information.

8. The home appliance diagnosis system of claim 7, wherein the model information comprises at least one of a production company and a model name of the home appliance and information on whether the electronic device can communicate.

9. A method of controlling a home appliance diagnosis system, the method comprising:
executing a diagnosis mode;
receiving from a tag unit (240) state data and diagnosis result data, obtained from the state data, representing whether an error has occurred in an operation state through tagging; and
displaying on a mobile device (2, 400) the state data or diagnosis result data
wherein the step of displaying the state data and diagnosis result data comprises:
displaying a plurality of tabs, and
displaying a plurality of tabs and a plurality of the state data and diagnosis result data to correspond thereto, wherein each state data and diagnosis result data is a detection result detected at a plurality of time points, wherein each detection result detected at the plurality of time points is a result detected at a time point in which at least one predetermined event occurs.

10. The method of claim 9, further comprising determining whether the diagnosis result data comprises request information requested by the user,
optionally,
the method further comprises displaying the state data, when the diagnosis result data does not comprise the request information.

11. The method of claim 9 or 10, wherein the step of receiving state data and diagnosis result data comprises displaying while receiving the state data and the diagnosis result data with a display or outputting with a sound when tagging is performed.

## Patentansprüche

1. Haushaltsgerätdiagnosesystem, das Folgendes umfasst:
ein mobiles Endgerät (2, 400) und
ein Haushaltsgerät (1), wobei das Haushaltsgerät (1) Folgendes umfasst:
eine Steuereinheit (210), die ausgelegt ist, Zustandsdaten, die Rohdaten, die einen Betriebszustand des Haushaltsgeräts repräsentieren, sind, zu verarbeiten und Diagnoseergebnisdaten, die repräsentieren, ob ein Fehler im Haushaltsgerät aufgetreten ist, auszugeben; und
eine Markierungseinheit (240), die eine Markierungsspeichereinheit (242), die ausgelegt ist, die Zustandsdaten und die Diagnoseergebnisdaten zu speichern, umfasst, wobei die Markierungseinheit außerdem eine Sende-/Empfangseinheit (244) umfasst, die ausgelegt ist, die Zustandsdaten und die Diagnoseergebnisdaten zum mobilen Endgerät (2, 400) zu übertragen, wenn das mobile Endgerät mit der Markierungseinheit markiert ist, wobei
das mobile Endgerät (2, 400) eine Kommunikationsvorrichtung (330) umfasst, die ausgelegt ist, mit der Markierungseinheit (240) zu markieren und die Zustandsdaten und die Diagnoseergebnisdaten zu empfangen, wobei das mobile Endgerät (2, 400) ferner eine Anzeigevorrichtung (340, 451) umfasst, die ausgelegt ist, Daten, die durch die Kommunikationsvorrichtung empfangen wurden, anzuzeigen, und
wobei das System **dadurch gekennzeichnet ist, dass** die Steuereinheit (210) des Haushaltsgeräts (1) ausgelegt ist, die Zustandsdaten und die Diagnoseergebnisdaten bei der Markierungseinheit (240) zu aktualisieren, wenn mindestens ein vorgegebenes Ereignis auftritt; und
das mobile Endgerät (2, 400) konfiguriert ist, mehrere Registerkarten anzuzeigen und mehrere Zustandsdaten und Diagnoseergebnisdaten, die ihnen entsprechen sollen, anzeigen, wobei die Zustandsdaten und die Diagnoseergebnisdaten jeweils ein Detektionsergebnis sind, das zu mehreren Zeitpunkten detektiert wird, und jedes Detektionsergebnis, das zu den mehreren Zeitpunkten detektiert wird, ein Ergebnis ist, das zu einem Zeitpunkt detektiert wird, zu dem das mindestens eine vorgegebene Ereignis auftritt.

2. Haushaltsgerätdiagnosesystem nach Anspruch 1, wobei das mindestens eine vorgegebene Ereignis Folgendes umfasst: eine Detektionseinheit detektiert den Betriebszustand neu und/oder ein Fehler tritt auf und/oder der Strom wird ausgeschaltet und/oder ein Stecker wird ausgesteckt.

3. Haushaltsgerätdiagnosesystem nach Anspruch 1 oder 2, wobei das mobile Endgerät ferner eine Eingabeeinheit (360, 430a, 430b, 430c), die ausgelegt ist, eine externe Eingabe zu erkennen, und eine Steuereinheit (310), die ausgelegt ist, zu bestimmen, ob die Diagnoseergebnisdaten Anforderungsinformationen umfassen, die durch den Anwender angefordert wurden, umfasst.

4. Haushaltsgerätdiagnosesystem nach Anspruch 3, wobei die Steuereinheit ferner ausgelegt ist, die Anzeigevorrichtung zu steuern, die Zustandsdaten anzuzeigen, wenn Anforderungsinformationen, die durch den Anwender angefordert wurden, kein Diagnoseergebniswert, der in den Diagnoseergebnisdaten enthalten ist, sind.

5. Haushaltsgerätdiagnosesystem nach einem der Ansprüche 1 bis 4, wobei das mobile Endgerät ferner einen Lautsprecher (350, 453a) umfasst, der ausgelegt ist, ein Schallsignal auszugeben, wenn die Kommunikationsvorrichtung und die Markierungseinheit markiert sind, wobei der Lautsprecher wahlweise ausgelegt ist, die Zustandsdaten oder die Diagnoseergebnisdaten als Schall auszugeben.

6. Haushaltsgerätdiagnosesystem nach einem der Ansprüche 1 bis 5, wobei die Anzeigevorrichtung ausgelegt ist, anzuzeigen, dass die Markierungseinheit und die Kommunikationsvorrichtung kommunizieren.

7. Haushaltsgerätdiagnosesystem nach einem der Ansprüche 1 bis 6, wobei das mobile Endgerät ferner eine Steuereinheit umfasst, die ausgelegt ist, zu bestimmen, ob die Diagnoseergebnisdaten Anforderungsinformationen, die durch den Anwender angefordert wurden, umfasst, wobei
die Markierungseinheit ausgelegt ist, Modellinformationen des Haushaltsgeräts zu speichern,
die Kommunikationsvorrichtung ausgelegt ist, die Modellinformationen von der Markierungseinheit zu empfangen, und
die Steuereinheit ausgelegt ist, auf der Grundlage der Modellinformationen zu bestimmen, ob ein Diagnosemodus durchgeführt werden kann.

8. Haushaltsgerätdiagnosesystem nach Anspruch 7, wobei die Modellinformationen eine Produktionsfirma und/oder einen Modellnamen des Haushaltsgeräts und Informationen darüber, ob die elektronische Vorrichtung kommunizieren kann, umfassen.

9. Verfahren zum Steuern eines Haushaltsgerätdiagnosesystems, wobei das Verfahren Folgendes umfasst:
Ausführen eines Diagnosemodus;
Empfangen von einer Markierungseinheit (240) von Zustandsdaten und Diagnoseergebnisdaten, die aus den Zustandsdaten erhalten wurden und durch Markieren repräsentieren, ob ein Fehler in einem Betriebszustand aufgetreten ist; und
Anzeigen an einem mobilen Endgerät (2, 400) der Zustandsdaten oder der Diagnoseergebnisdaten, wobei der Schritt des Anzeigens der Zustandsdaten und der Diagnoseergebnisdaten Folgendes umfasst:
Anzeigen mehrerer Registerkarten und
Anzeigen mehrerer Registerkarten und mehrerer Zustandsdaten und Diagnoseergebnisdaten, die ihnen entsprechen sollen, wobei die Zustandsdaten und die Diagnoseergebnisdaten jeweils ein Detektionsergebnis sind, das zu mehreren Zeitpunkten detektiert wird, und jedes Detektionsergebnis, das zu den mehreren Zeitpunkten detektiert wird, ein Ergebnis ist, das zu einem Zeitpunkt detektiert wird, zu dem das mindestens eine vorgegebene Ereignis auftritt.

10. Verfahren nach Anspruch 9, das ferner ein Bestimmen umfasst, ob die Diagnoseergebnisdaten Anforderungsinformationen umfassen, die durch den Anwender angefordert wurden, wobei das Verfahren ferner wahlweise ein Anzeigen der Zustandsdaten umfasst, wenn die Diagnoseergebnisdaten die Anforderungsinformationen nicht umfassen.

11. Verfahren nach Anspruch 9 oder 10, wobei der Schritt des Empfangens von Zustandsdaten und Diagnoseergebnisdaten ein Anzeigen, während die Zustandsdaten und die Diagnoseergebnisdaten empfangen werden, mit einer Anzeigevorrichtung oder ein Ausgeben mit Schall, wenn ein Markieren durchgeführt wird, umfasst.

## Revendications

1. Système de diagnostic d'appareil domestique, comprenant :
un dispositif mobile (2, 400) ; et
un appareil domestique (1), l'appareil domestique (1) comprenant :
un contrôleur (210) conçu pour traiter des données d'état, qui sont des données brutes qui représentent un état de fonctionnement de l'appareil domestique, et pour produire des données de résultat de diagnostic qui représentent si une erreur est survenue dans l'appareil domestique ; et
une unité d'étiquetage (240) comprenant une unité de stockage d'étiquettes (242) conçue pour stocker les données d'état et les données de résultat de diagnostic, l'unité d'étiquetage comprenant également une unité d'émission et de réception (244) conçue pour émettre les données d'état et les données de résultat de diagnostic vers le dispositif mobile (2, 400) quand le dispositif mobile est étiqueté avec l'unité d'étiquetage,
le dispositif mobile (2, 400) comprenant un dispositif de communication (330) conçu pour étiqueter avec l'unité d'étiquetage (240) et recevoir les données d'état et les données de résultat de diagnostic, le dispositif mobile (2, 400) comprenant en outre un écran (340, 451) conçu pour afficher des données reçues par le dispositif de communication,
le système étant **caractérisé en ce que** :
le contrôleur (210) de l'appareil domestique (1) est conçu pour mettre à jour les données d'état et les données de résultat de diagnostic au niveau de l'unité d'étiquetage (240) quand au moins un événement prédéterminé survient ; et
le dispositif mobile (2, 400) est configuré pour afficher une pluralité d'onglets et afficher en correspondance une pluralité de données parmi les données d'état et les données de résultat de diagnostic, chaque donnée d'état et donnée de résultat de diagnostic étant un résultat de détection détecté à une pluralité de moments, chaque résultat de détection détecté à la pluralité de moments étant un résultat détecté à un moment où survient l'au moins un événement prédéterminé.

2. Système de diagnostic d'appareil domestique selon la revendication 1, dans lequel l'au moins un événement prédéterminé comprend au moins un événement parmi : une unité de détection détecte récemment l'état de fonctionnement, une erreur survient, l'alimentation est mise hors tension et une fiche est débranchée.

3. Système de diagnostic d'appareil domestique selon la revendication 1 ou 2, dans lequel le dispositif mobile comprend en outre une unité d'entrée (360, 430a, 430b, 430c) conçue pour reconnaître une entrée externe et une unité de commande (310) conçue pour déterminer si les données de résultat de diagnostic comprennent une information de demande demandée par l'utilisateur.

4. Système de diagnostic d'appareil domestique selon la revendication 3, dans lequel l'unité de commande est en outre conçue pour commander l'écran pour afficher les données d'état quand une information de demande demandée par l'utilisateur n'est pas une valeur de résultat de diagnostic incluse dans les données de résultat de diagnostic.

5. Système de diagnostic d'appareil domestique selon l'une quelconque des revendications 1 à 4, dans lequel le dispositif mobile comprend en outre un haut-parleur (350, 453a) conçu pour produire un signal sonore quand le dispositif de communication et l'unité d'étiquetage sont étiquetés,
éventuellement,
dans lequel le haut-parleur est conçu pour produire les données d'état ou les données de résultat de diagnostic sous la forme d'un son.

6. Système de diagnostic d'appareil domestique selon l'une quelconque des revendications 1 à 5, dans lequel l'écran est conçu pour afficher que l'unité d'étiquetage et le dispositif de communication sont en train de communiquer.

7. Système de diagnostic d'appareil domestique selon l'une quelconque des revendications 1 à 6, dans lequel le dispositif mobile comprend en outre une unité de commande conçue pour déterminer si les données de résultat de diagnostic comprennent une information de demande demandée par l'utilisateur,
l'unité d'étiquetage étant conçue pour stocker une information de modèle de l'appareil domestique,
le dispositif de communication étant conçu pour recevoir l'information de modèle en provenance de l'unité d'étiquetage, et
l'unité de commande étant conçue pour déterminer si un mode de diagnostic peut être effectué sur la base de l'information de modèle.

8. Système de diagnostic d'appareil domestique selon la revendication 7, dans lequel l'information de modèle comprend au moins une information parmi une société de production et un nom de modèle de l'appareil domestique et une information indiquant si le dispositif électronique peut communiquer.

9. Procédé de commande d'un système de diagnostic d'appareil domestique, le procédé comprenant :
l'exécution d'un mode de diagnostic ;
la réception, en provenance d'une unité d'étiquetage (240), de données d'état et de données de résultat de diagnostic, obtenues à partir des données d'état, qui représentent, par étiquetage, si une erreur est survenue dans un état de fonctionnement ; et
l'affichage sur un dispositif mobile (2, 400) des données d'état ou des données de résultat de diagnostic,
l'étape d'affichage des données d'état et des données de résultat de diagnostic comprenant :
l'affichage d'une pluralité d'onglets, et
l'affichage d'une pluralité d'onglets et en correspondance d'une pluralité de données parmi les données d'état et les données de résultat de diagnostic, chaque donnée d'état et donnée de résultat de diagnostic étant un résultat de détection détecté à une pluralité de moments, chaque résultat de détection détecté à la pluralité de moments étant un résultat détecté à un moment où survient au moins un événement prédéterminé.

10. Procédé selon la revendication 9, comprenant en outre la détermination du fait que les données de résultat de diagnostic comprennent ou non une information de demande demandée par l'utilisateur,
éventuellement,
le procédé comprenant en outre l'affichage des données d'état quand les données de résultat de diagnostic ne comprennent pas l'information de demande.

11. Procédé selon la revendication 9 ou 10, dans lequel l'étape de réception de données d'état et de données de résultat de diagnostic comprend l'affichage, lors de leur réception, des données d'état et des données de résultat de diagnostic avec un écran ou leur production avec un son quand un étiquetage est effectué.
